# EUROPEAN PATENT SPECIFICATION

(11) **EP 0 825 225 B1**
(45) Date of publication and mention of the grant of the patent: **11.07.2001**
(21) Application number: 97114013.2
(22) Date of filing: 14.08.1997
(51) Int. Cl.: C08K 5/20, C08L 21/00

(54) **Rubber compositions containing n,n'-bis (hydroxyphenyl) maleamide**
Kautschukzusammensetzungen, die N,N'-bis(Hydroxyphenyl)maleinsäureamid enthalten
Compositions de caoutchouc contenant N,N'bis(hydroxyphényl)maleamide

(30) Priority: 22.08.1996 US 701472
(43) Date of publication of application: 25.02.1998
(73) Proprietor: THE GOODYEAR TIRE & RUBBER COMPANY, Akron, Ohio 44316-0001 (US)
(72) Inventor: Wideman, Lawson Gibson, Tallmadge, Ohio 44278 (US); Roennau, Raymond Benjamin, Stow, Ohio 44224 (US)
(74) Representative: Leitz, Paul

(56) References cited:
- EP-A- 0 476 310
- US-A- 2 683 132
- DATABASE WPI Section Ch, Week 7430 Derwent Publications Ltd., London, GB; Class A12, AN 74-54306V XP002046726 & JP 48 102 148 A (JAPAN SYNTHETIC RUBBER CO LTD) , 22 December 1973

## Description

### Background of the Invention

A pneumatic tire is a polymeric composite and is a complex system of interacting components, each with specific properties for maximum effectiveness. One of the more important components of a tire is the tread. Since the tread of a tire comes into contact with the road, it is particularly compounded with various fillers and rubbers for durability. For example, to achieve good durability in a tire tread, the tread stock should exhibit good tear strengths. Since there is a continuing effort to improve the durability of the tread of a tire, any rubber composition which exhibits improved tear strength is desired.

JP-A-62-23137 discloses a rubber composition containing 0.1 to 10 parts by weight of one or more monomaleimide compounds per 100 parts by weight of one or more rubbers. One example of such monomaleimide compound is N-hydroxymethylmaleimide.

US-A-4,433,114 relates to a rubber composition containing maleamic acid or derivatives of maleamic acid. Examples of such derivatives include alkyl amides and bis-maleamic acid compounds such as methylene-bis maleamic acid, ethylene-bis-maleamic acid and phenylene-bis-maleamic acid.

JP-A-137938-1988 relates to a rubber composition containing 0.2 to 7 parts of a maleimide compound. Examples of such maleimide compounds include N-(N'-phenyl-p-aminophenyl)monomaleimide, N-(N'-3,5-dimethyl-p-amino-phenyl)monomaleimide and N-(N'-chloro-p-aminophenyl)monomaleimide.

### Summary of the Invention

The present invention relates to a vulcanized rubber composition comprising a sulfur vulcanized rubber and from 0.1 phr to 10 phr of N,N'-bis(hydroxyphenyl)maleamide of the formula:

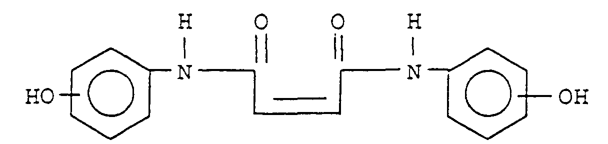

In addition, the present invention relates to a vulcanizable rubber composition comprising a sulfur vulcanizable rubber, a vulcanizing agent and the reaction product of (a) a methylene donor and (b) a methylene acceptor which is N,N'-bis(hydroxyphenyl)maleamide as defined above.

### Detailed Description of the Preferred Embodiment

In accordance with an embodiment of the present invention, the level of N,N'-bis(hydroxyphenyl)maleamide in the rubber may vary. For example, the level of N,N'-bis(hydroxyphenyl)maleamide may range from 0.1 to 10 parts by weight per 100 parts of rubber (also referred to herein as phr). Preferably, the level of N,N'-bis(hydroxyphenyl)maleamide ranges from 0.5 to 5 phr.

The present invention relates to the incorporation of N,N'-bis(hydroxyphenyl)maleamide in sulfur vulcanized rubber. One advantage of the present invention is that the N,N'-bis(hydroxyphenyl)maleamide exhibits low volatility and resembles the reactivity of resorcinol in the in-situ resin method. The N,N'-bis(hydroxyphenyl)maleamide also possesses a centrally located double bond for attachment to the diene polymer.

In accordance with another embodiment, the present invention relates to a vulcanizable rubber composition comprising: (1) a natural and/or synthetic rubber, (2) a sulfur vulcanizing agent, (3) from 0.5 to 10 phr of a methylene donor and (4) from 0.5 to 10 phr of N,N'-bis(hydroxyphenyl)maleamide represented by the formula:

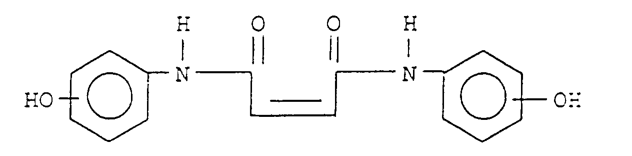

For purposes of the present invention, the compounds of the above formula are used as the methylene acceptor. The term "methylene acceptor" is known to those skilled in the art and is used to describe the reactant to which the methylene donor reacts to form what is believed to be a methylol monomer. The condensation of the methylol monomer by the formation of a methylene bridge produces the resin. The initial reactant that contributes the moiety that later forms into the methylene bridge is the methylene donor whereas the other reactant is the methylene acceptor.

Representative of the compounds of the above formula are N,N'-bis (3-hydroxyphenyl)maleamide (3-HPM) and N,N'-b (4-hydroxyphenyl)maleamide (4-HPM).

The weight ratio of the methylene donor to the maleamide may vary. For example, the weight ratio may range from 1:10 to 10:1. Preferably, the weight ratio will range from 3:1 to 1:3.

The combination of the N,N'-bis(hydroxyphenyl)maleamide with a methylene donor improves the properties of "sulfur vulcanizable elastomers or rubbers". The term "sulfur vulcanizable elastomer or rubber" as used herein embraces both natural and all its various raw and reclaim forms as well as various synthetic rubbers. Representative synthetic polymers include the homopolymerization products of butadiene and its homologues and derivatives, as for example, methyl-butadiene, dimethylbutadiene and pentadiene as well as copolymers such as those formed from butadiene or its homologues or derivatives with other unsaturated organic compounds. Among the latter are acetylenes, for example, vinyl acetylene; olefins, for example, isobutylene, which copolymerizes with isoprene to form butyl rubber; vinyl compounds, for example, acrylic acid, acrylonitrile (which polymerizes with butadiene to form NBR), methacrylic acid and styrene, the latter polymerizing with butadiene to form SBR, as well as vinyl esters and various unsaturated aldehydes, ketones and ethers, e.g. acrolein, methyl isopropenyl ketone and vinylethyl ether. Also included are the various synthetic rubbers prepared by the homopolymerization of isoprene and the copolymerization of isoprene and other diolefins in various unsaturated organic compounds. Also included are the synthetic rubbers such as 1,4-cis-polybutadiene and 1,4-cis-polyisoprene and similar synthetic rubbers.

Specific examples of synthetic rubbers include neoprene (polychloroprene), polybutadiene (including trans- and cis-1,4-polybutadiene), polyisoprene (including cis-1,4-polyisoprene), butyl rubber, copolymers of 1,3-butadiene or isoprene with monomers such as styrene, acrylonitrile and methyl methacrylate, as well as ethylene/propylene/diene monomer (EPDM) and in particular ethylene/propylene/dicyclopentadiene terpolymers. The preferred rubbers for use in the present invention are polybutadiene, polyisobutylene, EPDM, butadiene-styrene copolymers, cis,1,4-polyisoprene and polychloroprenes.

For purposes of the present invention, the term "sulfur vulcanized rubber" is used herein to describe the vulcanized reaction product of the above rubbers described for use in the sulfur vulcanizable elastomers or rubbers.

The vulcanizable rubber compositions of the present invention may contain a methylene donor. The term "methylene donor" is intended to mean a compound capable of reacting with the N,N'-bis(hydroxyphenyl)maleamide and generate the resin in-situ.

Examples of methylene donors which are suitable for use in the present invention include hexamethylene tetramine, hexaethoxymethylmelamine, hexamethoxymethylmelamine, lauryloxymethylpyridinium chloride, ethoxymethylpyridinium chloride, trioxan hexamethoxymethylmelamine, the hydroxyl groups of which may be esterified or partly esterified, and polymers of formaldehyde such as paraformaldehyde. In addition, the methylene donors may be N-substituted oxymethylmelamines, of the general formula: 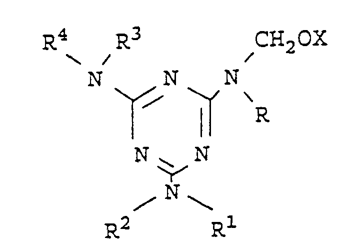 wherein X is an alkyl having 1 to 8 carbon atoms; R, R¹, R², R³ and R⁴ are individually selected from hydrogen, alkyl having from 1 to 8 carbon atoms, the group -CH₂OX or their condensation products. Specific methylene donors include hexakis(methoxymethyl) melamine, N,N',N"-trimethyl-N,N',N"-trimethylolmelamine, hexamethylolmelamine, N-methylolmelamine, N,N'-dimethylolmelamine, N,N',N"tris(methoxymethyl) melamine and N,N',N"tributyl-N,N',N"-trimethylol- melamine. The N-methylol derivatives of melamine are prepared by known methods.

The weight ratio of methylene donor to the N,N'-bis(hydroxyphenyl)maleamide may vary. Generally speaking, the weight ratio will range from 1:10 to 10:1. Preferably, the weight ratio ranges from 1:3 to 3:1.

The vulcanizable rubber composition of the present invention contains a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. The amount of sulfur vulcanizing agent will vary depending on the type of rubber and the particular type of sulfur vulcanizing agent that is used. Generally speaking, the amount of sulfur vulcanizing agent ranges from 0.1 to 5 phr with a range of from 0.5 to 2 being preferred.

Conventional rubber additives may be incorporated in the rubber stock of the present invention. The additives commonly used in rubber stocks include fillers, plasticizers, waxes, processing oils, retarders, antiozonants, antioxidants and the like. The total amount of filler that may be used may range from 30 to 150 phr, with a range of from 45 to 100 phr being preferred. Fillers include clays, calcium carbonate, calcium silicate, titanium dioxide and carbon black. Representative carbon blacks that are commonly used in rubber stocks include N326, N330, N472, N630, N642, N660, N754, N762, N765 and N990. Plasticizers are conventionally used in amounts ranging from 2 to 50 phr with a range of 5 to 30 phr being preferred. The amount of plasticizer used will depend upon the softening effect desired. Examples of suitable plasticizers include aromatic extract oils, petroleum softeners including asphaltenes, pentachlorophenol, saturated and unsaturated hydrocarbons and nitrogen bases, coal tar products, cumarone-indene resins and esters such as dibutylphthalate and tricresol phosphate. Common waxes which may be used include paraffinic waxes and microcrystalline blends. Such waxes are used in amounts ranging from 0.5 to 3 phr. Materials used in compounding which function as an accelerator-activator includes metal oxides such as zinc oxide and magnesium oxide which are used in conjunction with acidic materials such as fatty acid, for example, stearic acid, oleic acid and the like. The amount of the metal oxide may range from 1 to 14 phr with a range of from 2 to 8 phr being preferred. The amount of fatty acid which may be used may range from 0 phr to 5.0 phr with a range of from 0 phr to 2 phr being preferred.

Accelerators are used to control the time and/or temperature required for vulcanization and to improve the properties of the vulcanizate. In one embodiment, a single accelerator system may be used; i.e., primary accelerator. The primary accelerator(s) may be used in total amounts ranging from 0.5 to 4, preferably 0.8 to 2.0, phr. In another embodiment, combinations of a primary and a secondary accelerator might be used with the secondary accelerator being used in a smaller, equal or greater amount to the primary accelerator. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The rubber compounds of the present invention may also contain a cure activator. A representative cure activator is methyl trialkyl (C₈-C₁₀) ammonium chloride commercially available under the trademark Adogen® 464 from Sherex Chemical Company of Dublin, Ohio. The amount of activator may be used in a range of from 0.05 to 5 phr.

Siliceous pigments may be used in the rubber compound applications of the present invention, including pyrogenic and precipitated siliceous pigments (silica), although precipitate silicas are preferred. The siliceous pigments preferably employed in this invention are precipitated silicas such as, for example, those obtained by the acidification of a soluble silicate, e.g., sodium silicate. Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1930). The silica may also be typically characterized by having a dibutylphthalate (DBP) absorption value in a range of 100 to 400, and more usually 150 to 300. The silica might be expected to have an average ultimate particle size, for example, in the range of 0.01 to 0.05 micron as determined by the electron microscope, although the silica particles may be even smaller, or possibly larger, in size. Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc. Generally speaking, the amount of silica may range from 5 to 120 phr. The amount of silica will generally range from 5 to 120 phr. Preferably, the amount of silica will range from 10 to 30 phr.

A class of compounding materials known as scorch retarders are commonly used. Phthalic anhydride, salicylic acid, sodium acetate and N-cyclohexyl thiophthalimide are known retarders. Retarders are generally used in an amount ranging from 0.1 to 0.5 phr.

Conventionally, antioxidants and sometimes antiozonants, hereinafter referred to as antidegradants, are added to rubber stocks. Representative antidegradants include monophenols, bisphenols, thiobisphenols, polyphenols, hydroquinone derivatives, phosphites, thioesters, naphthyl amines, diphenyl-p-phenylenediamines, diphenylamines and other diaryl amine derivatives, para-phenylenediamines, quinolines and mixtures thereof. Specific examples of such antidegradants are disclosed in The Vanderbilt Rubber Handbook (1990), pages 282-286. Antidegradants are generally used in amounts from 0.25 to 5.0 phr with a range of from 1.0 to 3.0 phr being preferred.

The rubber compound of the present invention may be used as a wire coat or bead coat for use in a tire. Any of the cobalt compounds known in the art to promote the adhesion of rubber to metal may be used. Thus, suitable cobalt compounds which may be employed include cobalt salts of fatty acids such as stearic, palmitic, oleic, linoleic and the like; cobalt salts of aliphatic or alicyclic carboxylic acids having from 6 to 30 carbon atoms; cobalt chloride, cobalt naphthenate, cobalt neodecanoate, cobalt carboxylate and an organo-cobalt-boron complex commercially available under the designation Manobond C from Wyrough and Loser, Inc, Trenton, New Jersey. Manobond C is believed to have the structure: 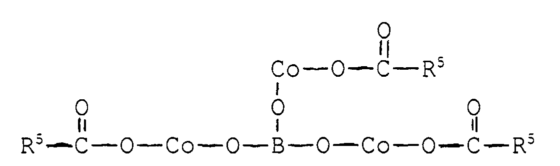 in which R⁵ is an alkyl group having from 9 to 12 carbon atoms.

Amounts of cobalt compound which may be employed depend upon the specific nature of the cobalt compound selected, particularly the amount of cobalt metal present in the compound. Since the amount of cobalt metal varies considerably in cobalt compounds which are suitable for use, it is most appropriate and convenient to base the amount of the cobalt compound utilized on the amount of cobalt metal desired in the finished stock composition.

The amount of the cobalt compound may range from 0.1 to 2.0 phr. Preferably, the amount of cobalt compound may range from 0.5 to 1.0 phr. When used, the amount of cobalt compound present in the stock composition should be sufficient to provide from 0.01 percent to 0.35 percent by weight of cobalt metal based upon total weight of the rubber stock composition with the preferred amounts being from 0.03 percent to 0.2 percent by weight of cobalt metal based on total weight of skim stock composition.

The sulfur vulcanizable rubber compound is cured at a temperature ranging from 125°C to 180°C. Preferably, the temperature ranges from 135°C to 160°C.

The mixing of the rubber compound can be accomplished by methods known to those having skill in the rubber mixing art. For example, the ingredients are typically mixed in at least two stages, namely at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) of the preceding non-productive mix stage(s). The terms "non-productive" and "productive" mix stages are well known to those having skill in the rubber mixing art.

The N,N'-bis(hydroxyphenyl)maleamide may be compounded in either the productive or nonproductive stock. Preferably, the N,N'-bis(hydroxyphenyl)maleamide is compounded in the nonproductive stock because more uniform mixing is generally achieved. Incorporation of the N,N'bis(hydroxyphenyl)maleamide into the sulfur vulcanizable rubber may be accomplished by conventional means of mixing such as by the use of a Banbury or Brabender.

The vulcanizable rubber composition for use in forming a composite with reinforcing material may be used in the manufacture of tires, belts or hoses. Preferably, the composition of the present invention is in the form of a tire and more specially as a component of a tire, including, the tread, wirecoat, beadcoat and plycoat.

Some of the cure properties were determined using an oscillating disc rheometer (ODR) which was operated at a temperature of 165°C and at a frequency of 11 hertz. A description of oscillating disc rheometers can be found in the Vanderbilt Rubber Handbook edited by Robert F Ohm (Norwalk, Conn., R. T. Vanderbilt Company, Inc., 1990), pages 554-558. The use of this curemeter and standardized values read from the curve are specified in ASTM D-2084. A typical cure curve obtained on an oscillating disc rheometer is shown on page 556 of the 1990 edition of the Vanderbilt Rubber Handbook.

In such an oscillating disc rheometer, compounded rubber samples are subjected to an oscillating shearing action of constant amplitude. The torque of the oscillating disc embedded in the stock that is being tested is required to oscillate the rotor at the vulcanization temperature. The values obtained using this cure test are very significant since changes in the rubber or the compounding recipe are very readily detected. It is obvious that it is normally advantageous to have a fast cure rate.

Some cure properties were also measured on a moving die rheometer (MDR) which is described on page 557 of the above Vanderbilt Rubber Handbook.

Some of the following tables report cure properties that were determined from cure curves that were obtained for the various rubber formulations that were prepared. These properties include the total increase in torque (Delta Torque).

Strebler adhesion testing was done to determine the interfacial adhesion between various rubber formulations that were prepared. The interfacial adhesion was determined by pulling one compound away from another at a right angle to the untorn test specimen with the two ends being pulled mart at a 180° angle to each other using an Instron machine. The area of contact was determined from placement of a Mylar sheet between the compounds during cure. A window in the Mylar allowed the two materials to come into contact with each other during curing and subsequent testing.

The following examples are presented in order to illustrate but not limit the present invention.

### Example 1

### Preparation of N,N'-bis(4-hydroxyphenyl)maleamide

A 2-liter round-bottom flask was charged with 41.0 g (0.20 mole) of N-(4-hydroxyphenyl) maleamic acid, 21.6 g (0.20 mole) of 4-aminophenol and 800 ml of reagent acetone. The reaction mixture was heated to reflux with stirring under an atmosphere of nitrogen. After refluxing for 1 hour, the reaction mixture was cooled and the solvent removed under reduced pressure. The solid was dried for 4 hours at 100°C under 29 inches of Hg vacuum (a pressure of 98 k Pa) to give 55 g of a brown powder melting at 135-146°C. The powder showed an NMR spectrum consistent with its structure.

### Example 2

### Physical Testing

Table I below shows the basic rubber compound that was used in this example. The rubber compound was prepared in a two-stage Banbury mix. All parts and percentages are by weight unless otherwise noted.

All samples were prepared with the same procedure and ingredients except as to the using the respective amount (phr) of components listed in Table II. The physical data for each sample is also listed in Table II.

**Table I**

| Non-Productive | |
|---|---|
| Emulsion SBR¹ | 75.0 |
| Emulsion SBR² | 25.0 |
| Carbon Black³ | 60 |
| Processing Oils | 5.62 |
| Waxes | 1.50 |
| Stearic Acid | 3.0 |
| Antidegradant⁴ | 1.0 |
| Antidegradant⁵ | 2.0 |
| N,N'-bis(4-hydroxyphenyl)maleamide | Varied |

| Productive | |
|---|---|
| Sulfur | 1.5 |
| Hexamethylenetetramine | Varied |
| Zinc Oxide | 4.0 |
| Antidegradant⁶ | 1.06 |
| Accelerator⁷ | 1.10 |
| Accelerator⁸ | .25 |

| | |
|---|---|
| ¹Commercially available from The Goodyear Tire & Rubber Company as PLF 1502. | |
| ²Commercially available from The Goodyear Tire & Rubber Company as PLF 1712C. Added as 34.38 phr oil extended rubber) (25 phr rubber and 9.38 phr oil). | |
| ³N660 | |
| ⁴Polymerized trimethyldihydroquinoline | |
| ⁵N-1,3-dimethyl butyl N-phenyl paraphenylene diamine | |
| ⁶Diarylphenylene diamine | |
| ⁷N-t-butyl-2-benzothiazole sulfenamide | |
| ⁸Diphenyl guanidine | |

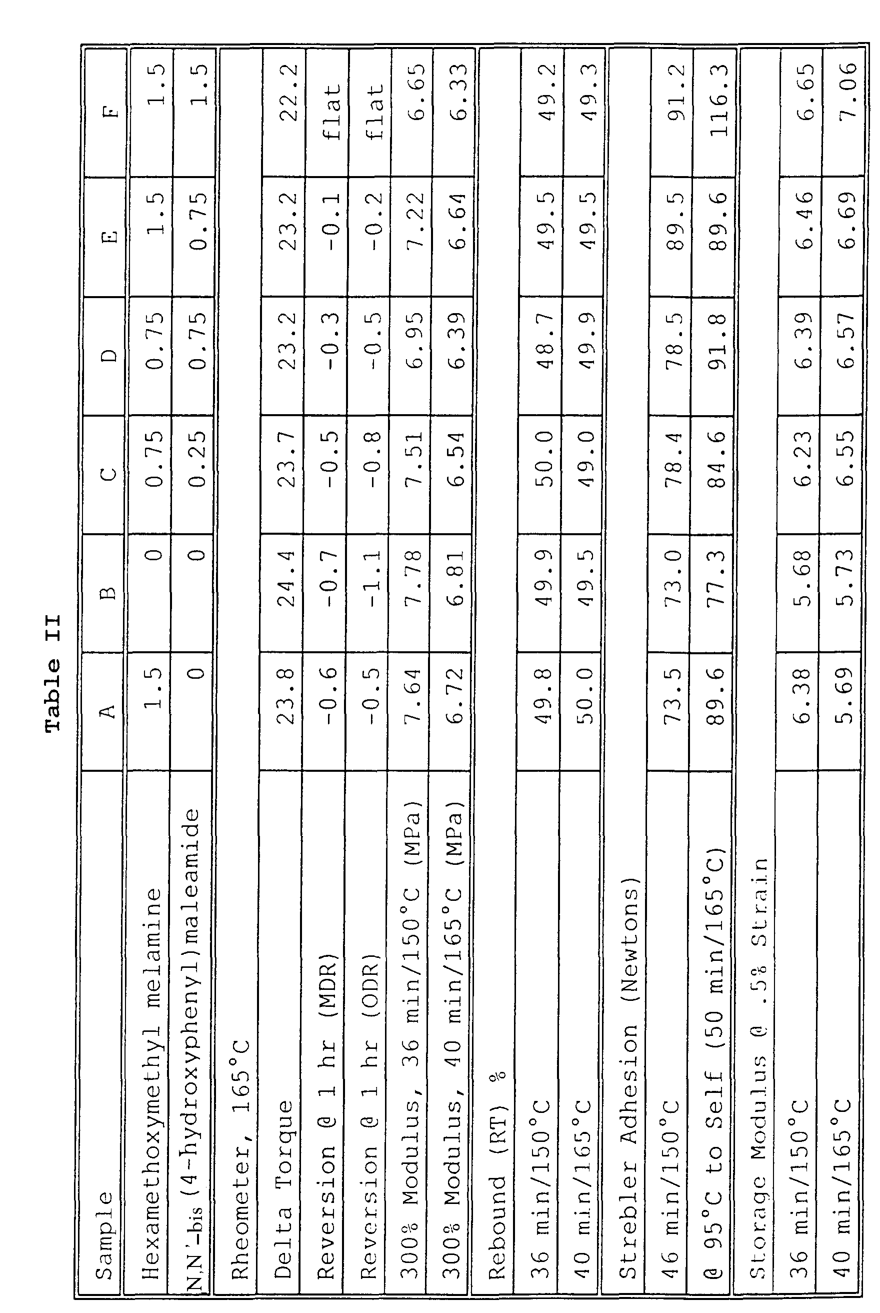

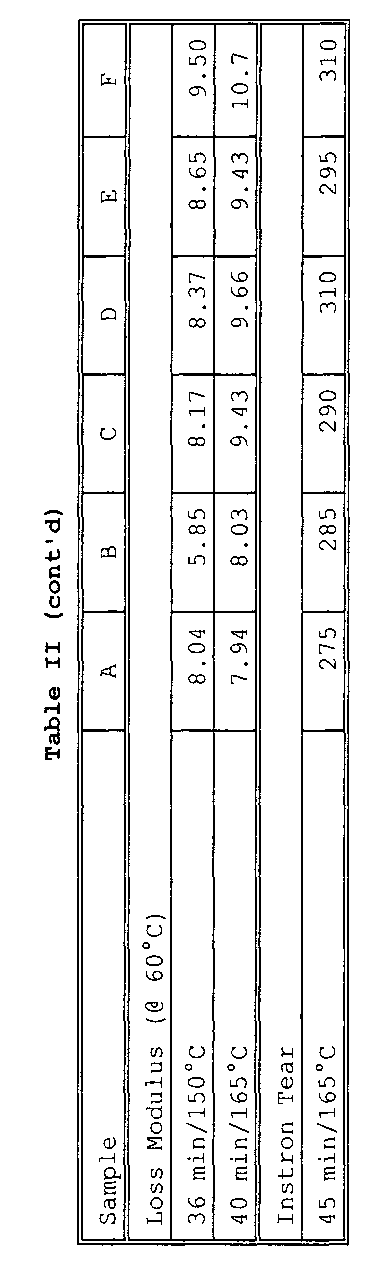

Table II shows that the delta torque of the cured rubber containing 4-HPM and the melamine methylene donor is maintained at varied levels. This is important because it is related to the stiffness of the rubber which must be maintained but not appreciably increased. It is especially important that the amount of cured-compound reversion actually improves in the cured rubber compound as the amount of 4-HPM and methylene donor are increased until a flat rheometer curve is attained out to 1 hour of heating, showing that rubber durability has increased.

Table II also shows that the modulus at 300 percent elongation (300 percent Modulus) relating to rubber stiffness and rebound (relating to compound hysteresis and heat buildup) are maintained as the methylene acceptor-methylene donor network is formed. Formation of the 4-HPM-methylene acceptor network is shown by directional increases in Strebler adhesion (tear), Storage Modulus and Loss Modulus as the amount of network-forming methylene donor-methylene acceptor level increases. These desirable properties are realized with a non-volatile, non-fuming resorcinol replacement.

## Claims

1. A vulcanized rubber composition characterized by a sulfur vulcanized rubber and from 0.1 to 10 phr of N,N'-bis(hydroxyphenyl)maleamide of the formula:

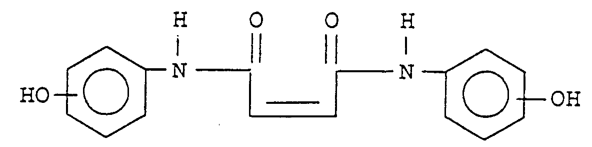

2. A vulcanizable rubber composition characterized by a sulfur vulcanizable rubber, a vulcanizing agent and the reaction product of (a) a methylene donor and (b) a methylene acceptor which is N,N'-bis(hydroxyphenyl)maleamide of the formula:

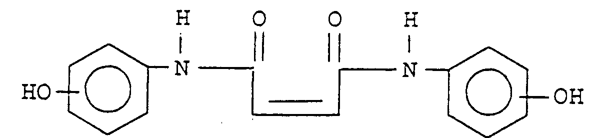

3. The composition of claim 1 or 2 characterized in that the rubber is selected from the group consisting of natural rubber, polychloroprene, polybutadiene, polyisoprene, butyl rubber, EPDM, styrene/butadiene copolymers, terpolymers of acrylonitrile, butadiene and styrene and blends thereof.

4. The composition of claim 2 characterized in that the methylene donor is selected from the group consisting of hexamethylene tetramine, hexamethoxymethyl melamine, lauryloxymethyl pyridinium chloride, ethyloxymethyl pyridinium chloride, trioxan hexamethylolmelamine and paraformaldehyde.

5. The composition according to claim 2 characterized in that the methylene donor is selected from the general formula: 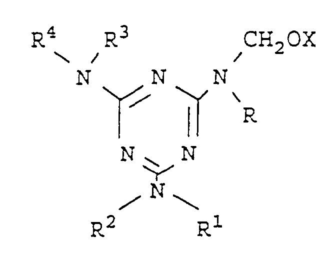 wherein X is an alkyl having from 1 to 8 carbon atoms, R, R¹, R², R³ and R⁴ are individually selected from the group consisting of hydrogen, an alkyl having from 1 to 8 carbon atoms, the group -CH₂OX or their condensation products.

6. The composition of claim 2 characterized in that the methylene donor is selected from the group consisting of hexakis(methoxymethyl)melamine,
N,N',N"-trimethyl- N,N',N"-trimethylolmelamine, hexamethylolmelamine, N-methylolmelamine,
N,N'-dimethylolmelamine, N,N',N"tris(methoxymethyl) melamine and
N,N',N"tributyl-N,N',N"-trimethylolmelamine.

7. The composition of claim 2 characterized in that the weight ratio of methylene donor to the maleamide ranges from 1:10 to 10:1.

8. The composition of claim 2 characterized in that the sulfur vulcanizing agent ranges from 0.1 to 5 phr and is selected from the group consisting of elemental sulfur, an amine disulfide, polymeric polysulfide or sulfur olefin adduct.

9. The composition of claim 2 characterized in that the amount of the maleamide that is included in the sulfur vulcanizable rubber ranges from 0.1 to 10 phr.

## Patentansprüche

1. Vulkanisierte Kautschukzusammensetzung, gekennzeichnet durch einen Schwefel-vulkanisierten Kautschuk und 0,1 bis 10 ThK N,N'-Bis(hydroxyphenyl)maleamid der folgenden Formel:

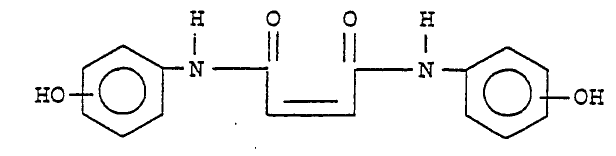

2. Vulkanisierbare Kautschukzusammensetzung, gekennzeichnet durch einen Schwefel-vulkanisierbaren Kautschuk, ein Vulkanisationsmittel und das Reaktionsprodukt von (a) einem Methylen-Donor und (b) einem Methylen-Akzeptor, bei welchem es sich um N,N'-Bis(hydroxyphenyl)maleamid der folgenden Formel handelt:

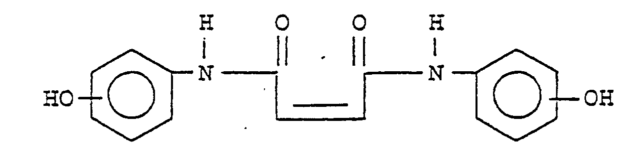

3. Zusammensetzung nach Anspruch 1 oder 2, dadurch gekennzeichnet, daß der Kautschuk ausgewählt ist aus der Gruppe bestehend aus Naturkautschuk, Polychloropren, Polybutadien, Polyisopren, Butylkautschuk, EPDM, Styrol/Butadien-Copolymeren, Terpolymeren von Acrylnitril, Butadien und Styrol, und Mischungen davon.

4. Zusammensetzung nach Anspruch 2, dadurch gekennzeichnet, daß der Methylen-Donor ausgewählt ist aus der Gruppe bestehend aus Hexamethylentetramin, Hexamethoxymethylmelamin, Lauryloxymethylpyridiniumchlorid, Ethyloxymethylpyridiniumchlorid, Trioxanhexamethylolmelamin und Paraformaldehyd.

5. Zusammensetzung nach Anspruch 2, dadurch gekennzeichnet, daß der Methylen-Donor ausgewählt ist aus der allgemeinen Formel: 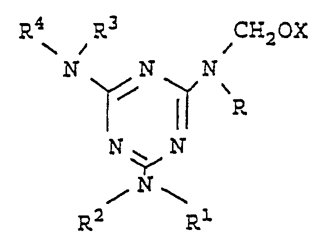 worin X ein Alkyl mit 1 bis 8 Kohlenstoffatomen bedeutet, R, R¹, R², R³ und R⁴ einzeln ausgewählt sind aus der Gruppe bestehend aus Wasserstoff, einem Alkyl mit 1 bis 8 Kohlenstoffatomen, der Gruppe -CH₂OX oder deren Kondensationsprodukten.

6. Zusammensetzung nach Anspruch 2, dadurch gekennzeichnet, daß der Methylen-Donor ausgewählt ist aus der Gruppe bestehend aus Hexakis(methoxymethyl)melamin, N,N',N"-Trimethyl-N,N',N"-trimethylolmelamin, Hexamethylolmelamin, N-Methylolmelamin, N,N'-Dimethylolmelamin, N,N',N"-Tris(methoxymethyl)melamin und N,N',N"-Tributyl-N,N',N"-trimethylolmelamin.

7. Zusammensetzung nach Anspruch 2, dadurch gekennzeichnet, daß das Gewichtsverhältnis von Methylen-Donor zu dem Maleamid im Bereich von 1:10 bis 10:1 liegt.

8. Zusammensetzung nach Anspruch 2, dadurch gekennzeichnet, daß das Schwefel-Vulkanisationsmittel im Bereich von 0,1 bis 5 ThK liegt und ausgewählt ist aus der Gruppe bestehend aus elementarem Schwefel, einem Amindisulfid, polymerem Polysulfid oder Schwefel-Olefin-Addukt.

9. Zusammensetzung nach Anspruch 2, dadurch gekennzeichnet, daß die Menge des Maleamids, die in dem Schwefel-vulkanisierbaren Kautschuk enthalten ist, im Bereich von 0,1 bis 10 ThK liegt.

## Revendications

1. Composition de caoutchouc vulcanisé caractérisée par un caoutchouc vulcanisé au soufre et par une quantité de 0,1 à 10 phr du N,N'-bis-(hydroxyphényl)maléamide répondant à la formule:

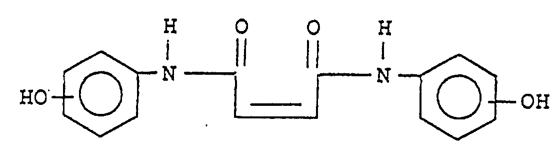

2. Composition de caoutchouc vulcanisable caractérisée par un caoutchouc vulcanisable au soufre, un agent de vulcanisation et le produit réactionnel de (a) un donneur de groupes méthylène et (b) un accepteur de groupes méthylène à savoir le N,N'-bis-(hydroxyphényl)maléamide répondant à la formule:

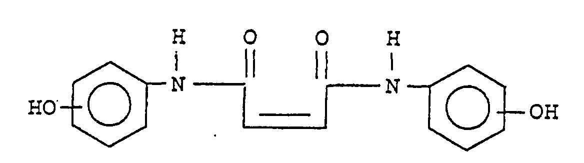

3. Composition selon la revendication 1 ou 2, caractérisée en ce que le caoutchouc est choisi parmi le groupe constitué par le caoutchouc naturel, du polychloroprène, du polybutadiène, du polyisoprène, du caoutchouc butyle, du EPDM, des copolymères de styrène/butadiène, des terpolymères d'acrylonitrile, de butadiène et de styrène, ainsi que leurs mélanges.

4. Composition selon la revendication 2, caractérisée en ce que le donneur de groupes méthylène est choisi parmi le groupe constitué par l'hexaméthylènetétramine, l'hexaméthoxyméthylmélamine, le chlorure de lauryloxyméthylpyridinium, le chlorure d'éthoxyméthylpyridinium, l'hexaméthoxyméthylolmélamine de trioxanne et le paraformaldéhyde.

5. Composition selon la revendication 2, caractérisée en ce que le donneur de groupes méthylène est choisi parmi la formule générale ci-après: 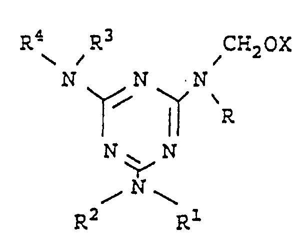 dans laquelle X représente un groupe alkyle contenant de 1 à 8 atomes de carbone; R, R¹, R², R³ et R⁴ sont choisis, indépendamment l'un de l'autre, parmi le groupe constitué par un atome d'hydrogène, par un groupe alkyle contenant de 1 à 8 atomes de carbone, par le groupe -CH₂OX ou par leurs produits de condensation.

6. Composition selon la revendication 2, caractérisée en ce que le donneur de groupes méthylène est choisi parmi le groupe constitué par l'hexakis-(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N, N',N"-tris(méthoxyméthyl)mélamine et la N,N',N"-tributyl-N,N',N"-triméthylolmélamine.

7. Composition selon la revendication 2, caractérisée en ce que le rapport pondéral du donneur de groupes méthylène au maléamide se situe dans le domaine de 1:10 à 10:1.

8. Composition selon la revendication 2, caractérisée en ce que la quantité de l'agent de vulcanisation au soufre se situe dans le domaine de 0,1 à 5 phr et est choisi parmi le groupe constitué par le soufre élémentaire, un disulfure d'amine, un polysulfure polymère ou un adduit de soufre-oléfine.

9. Composition selon la revendication 2, caractérisée en ce que la quantité du maléamide qui est inclus dans le caoutchouc vulcanisable au soufre se situe dans le domaine de 0,1 à 10 phr.
